(19) **Europäisches Patentamt European Patent Office Office européen des brevets**

(11) **EP 4 118 317 B1**

(12) **FASCICULE DE BREVET EUROPEEN**

(45) Date de publication et mention de la délivrance du brevet:
**06.05.2026   Bulletin 2026/19**

(21) Numéro de dépôt: **21707310.5**

(22) Date de dépôt: **01.03.2021**

(51) Classification Internationale des Brevets (IPC):
**F03B 13/14** *(2006.01)*

(52) Classification Coopérative des Brevets (CPC):
**F03B 13/14;** F05B 2240/95; F05B 2260/821;
F05B 2260/84; F05B 2270/404; Y02E 10/30

(86) Numéro de dépôt international:
**PCT/EP2021/055029**

(87) Numéro de publication internationale:
**WO 2021/180502 (16.09.2021 Gazette 2021/37)**

(54) **PROCEDE DE PREDICTION D'UNE CARACTERISTIQUE RESULTANTE DE LA HOULE A PARTIR D'UN MODELE SPECTRAL DE LA HOULE**

**VERFAHREN ZUR VORHERSAGE EINER EIGENSCHAFT AUS EINER WELLENGANGFOLGE AUF DER BASIS EINES SPEKTRALMODELLS DER WELLENGANGFOLGE**

**METHOD FOR PREDICTING A CHARACTERISTIC RESULTING FROM A SWELL ON THE BASIS OF A SPECTRAL MODEL OF THE SWELL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.03.2020  FR 2002422**

(43) Date de publication de la demande:
**18.01.2023   Bulletin 2023/03**

(73) Titulaire: **IFP Energies nouvelles
92500 Rueil-Malmaison (FR)**

(72) Inventeurs:
  • **TONA, Paolino
    92852 Rueil-Malmaison Cedex
     (FR)**
  • **MERIGAUD, Alexis
    92852 Rueil-Malmaison Cedex
     (FR)**

(74) Mandataire: **IFP Energies nouvelles
Département Propriété Industrielle
Rond Point de l'échangeur de Solaize
BP3
69360 Solaize (FR)**

(56) Documents cités:
   **US-A1- 2009 146 429      US-A1- 2010 230 370
   US-A1- 2017 298 899**

   • **J. ROSS HALLIDAY ET AL: "An application of the Fast Fourier Transform to the short-term prediction of sea wave behaviour", RENEWABLE ENERGY., vol. 36, no. 6, 1 June 2011 (2011-06-01), GB, pages 1685 - 1692, XP055715812, ISSN: 0960-1481, DOI: 10.1016/j.renene.2010.11.035**
   • **ANNETTE KRISTIN BRASK: "Control and Estimation of Wave Energy Converters", 27 June 2015 (2015-06-27), XP055715809, Retrieved from the Internet <URL:https://ntnuopen.ntnu.no/ntnu-xmlui/bitstream/handle/11250/2350944/13829_FULLTEXT.pdf?sequence=1>**

## Description

### Domaine technique

La présente invention concerne le domaine de la prédiction de la houle, en particulier pour la commande d'un système houlomoteur.

Les ressources énergétiques renouvelables connaissent un fort intérêt depuis quelques années. Ces ressources sont propres, gratuites et inépuisables, autant d'atouts majeurs dans un monde rattrapé par la diminution inexorable des ressources fossiles disponibles, et prenant conscience de la nécessité de préserver la planète. Parmi ces ressources, l'énergie houlomotrice, relativement méconnue par rapport aux technologies largement médiatisées comme l'éolien ou le solaire, contribue à l'indispensable diversification de l'exploitation des énergies renouvelables. Les dispositifs de récupération d'énergie des vagues, couramment appelés appareils "houlomoteurs", sont particulièrement intéressants, avec un potentiel de 300 à 400 GW le long des côtes européennes, sans émission de gaz à effet de serre. Ils sont particulièrement bien adaptés pour fournir de l'électricité à des sites insulaires isolés.

Par exemple, les demandes de brevet FR 2876751, FR 2973448, US 2010/230370 A1 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de mettre le mobile en résonance avec les vagues (mode moteur). Par contre, pour produire un couple ou force qui résiste au mouvement du mobile, on récupère une puissance via la machine de conversion (mode générateur).

Dans l'intention d'améliorer le rendement et donc la rentabilité des dispositifs pour convertir l'énergie des vagues en énergie électrique (systèmes houlomoteurs), il est intéressant de contrôler en temps réel la machine de conversion, afin de maximiser l'énergie absorbée par le système. Cela nécessite de prédire en temps réel le comportement de la houle, qu'il s'agisse de la force exercée sur le système houlomoteur ou de l'élévation de la surface libre .

Dans d'autres domaines relatifs aux systèmes flottants (plateforme flottante, éolienne flottante, navire...), il est également intéressant de prédire le comportement de la houle pour assurer la stabilité de ces systèmes flottants ou optimiser leur utilisation.

Par exemple, une application possible est le positionnement dynamique des navires, la compensation du pilonnement, ou encore le contrôle de bras robotiques à bord de navires. D'autres types d'applications peuvent tirer profit de la prédiction, plusieurs dizaines de secondes à l'avance, de périodes d'accalmie, telles l'appontage d'hélicoptères, la récupération de petits submersibles ou bateaux de surfaces, ainsi que diverses opérations de transbordement d'équipage et de transfert de navire à navire, qui nécessitent toutes une fenêtre temporelle relativement brève pendant laquelle le mouvement dû à la houle est suffisamment petit. La possibilité de prédire ces périodes d'accalmies, ne serait-ce que quelques dizaines de secondes à l'avance, pourrait étendre significativement les conditions de mer dans lesquelles ces opérations peuvent être effectuées.

Un autre exemple d'application concerne les éoliennes flottantes. En effet, l'angle d'orientation des pales de ces éoliennes peut être contrôlé en temps réel, non seulement pour la maximisation de la puissance récupérée et la régulation de la vitesse du rotor (qui constituent les objectifs "classiques" du contrôle des pales des éoliennes), mais également pour réduire le tangage ou les efforts mécaniques induits par la houle. Pour ces deux derniers objectifs, l'application de commande prédictive est une piste intéressante, qui nécessite de prédire l'action de la houle sur le flotteur.

### Technique antérieure

Un certain nombre d'algorithmes, permettant la prédiction à court terme de la force ou de l'élévation de la houle à partir de séries temporelles de mesures passées, ont été proposés dans la littérature. Parmi ceux-ci, on connaît l'approche de décomposition harmonique (implémentée par filtre de Kalman ou moindres carrés récursifs), l'approche d'extrapolation sinusoïdale (implémentée par filtre de Kalman étendu) et l'approche par modèle autorégressif (AR) avec minimisation, sur un seul pas de temps, de l'erreur de prédiction ou sur plusieurs pas de temps (on parle dans ce cas d'identification prédictive à longue portée, « long range predictive identification », ou LRPI, en anglais). De telles approches sont décrites dans les documents suivants :

- Francesco Fusco and John V Ringwood. "Short-term wave forecasting for real-time control of wave energy converters". In: Sustainable Energy, IEEE Transactions on 1.2 (2010), pp. 99-106
- DS Shook, C Mohtadi, and SL Shah. "Identification for long-range predictive control". In: IEE Proceedings D (Control Theory and Applications). Vol. 138. 1. IET. 1991, pp. 75-84.

En outre, on connaît du document suivant :

- B Fischer, P Kracht, and S Perez-Becker. "Online-algorithm using adaptive filters for short-term wave prediction and its implementation". In: Proceedings of the 4th International Conference on Ocean Energy (ICOE), Dublin, Ireland. 2012, pp. 17-19

plusieurs variantes de prédicteurs basés sur des modèles autorégressifs AR, et plus particulièrement un banc de filtres constitué de plusieurs prédicteurs, basés sur des modèles AR, dont les coefficients sont adaptés par un algorithme des moindres carrés récursifs.

Une autre variante de modèle autorégressif est détaillée dans la demande de brevet FR 3042889 (WO 2017/071946) concernant un procédé de prédiction de la houle (force, élévation ...) à court terme, à partir d'une série temporelle de mesures passées de la houle. Cette variante suppose un contexte instationnaire, mais avec des changements lents d'états de mer. Elle est basée sur la mise à jour, au moyen d'un filtre de Kalman adaptatif, des coefficients d'un modèle autorégressif (AR) permettant une minimisation multi pas (c'est-à-dire sur un horizon de plusieurs pas de temps dans le futur) de l'erreur de prédiction. Toutefois, ce procédé ne permet pas de combiner des mesures de nature différente (issues de capteurs se rapportant au comportement du système lui-même, ou de capteurs se rapportant au champ de vague), car il repose sur une seule série temporelle. De plus cette méthode, comme toutes les méthodes citées précédemment, ne permet pas de réaliser de prédictions précises au-delà d'une demi-période de houle lorsque le rapport du signal sur bruit est faible ou des comportements non-linéaires sont présents (et dans aucun cas au-delà d'une période de houle).

**Résumé de l'invention**

La présente invention a pour but de prédire une caractéristique résultante de la houle sur un horizon futur, en temps réel, et de manière fiable et précise, en tenant compte de la variabilité de l'état de la mer. Dans ce but, la présente invention concerne un procédé de prédiction d'une caractéristique résultante de la houle pour un système flottant, le procédé mettant en œuvre la mise à jour d'un modèle spectral de la houle pour former un modèle de prédiction de la houle, modèle qu'on applique à des mesures en temps réel pour prédire la caractéristique résultante de la houle. La mise à jour du modèle spectral de la houle permet une meilleure représentativité de la houle et par conséquent une meilleure prédiction.

L'invention concerne un procédé de prédiction d'une caractéristique résultante de la houle pour un système flottant soumis à ladite houle, ledit système flottant étant pourvu d'au moins un capteur mesurant la variation de ladite houle, ledit procédé de prédiction de ladite caractéristique résultante de ladite houle mettant en œuvre une fonction de transfert qui relie ladite caractéristique résultante de ladite houle à une mesure dudit au moins un capteur. Pour ce procédé, on met en œuvre les étapes suivantes :

a) On mesure en temps réel à un premier intervalle de temps la variation de ladite houle au moyen dudit au moins un capteur ;
b) On met à jour à un deuxième intervalle de temps un modèle spectral de ladite houle, ledit modèle spectral de ladite houle étant mis à jour à partir de données météorologiques et/ou à partir d'au moins une mesure dudit au moins un capteur, et ledit deuxième intervalle de temps étant supérieur au premier intervalle de temps ;
c) On détermine un modèle de prédiction de la houle au moyen de ladite fonction de transfert et dudit modèle spectral de ladite houle mis à jour ; et
d) On détermine, en temps réel, ladite caractéristique résultante de ladite houle pour une durée future au moyen dudit modèle de prédiction de la houle appliqué auxdites mesures en temps réel.

Selon un mode de réalisation, ledit système flottant est un système houlomoteur, qui convertit l'énergie de la houle en énergie électrique, pneumatique ou hydraulique, un navire, une plateforme flottante, une éolienne flottante, un véhicule amphibie ou un hydravion.

Conformément à une mise en œuvre, ledit au moins un capteur est un capteur choisi parmi : un radar, un capteur lidar, un capteur de déformation d'au moins une partie déformable dudit système flottant, un capteur de déplacement d'au moins une partie mobile dudit système flottant, un accéléromètre placé sur au moins une partie mobile dudit système flottant, un capteur de pression au sein d'au moins une partie pneumatique ou hydraulique dudit système flottant.

Avantageusement, ledit premier intervalle de temps est compris entre 0,01 s et 10 min.

De manière avantageuse, ledit deuxième intervalle de temps est compris entre 10 min et 24 h.

Selon un aspect, ledit procédé de prédiction de la caractéristique résultante de la houle comprend une étape préalable de construction de ladite fonction de transfert.

Selon une caractéristique, ledit procédé de prédiction de la caractéristique résultante de la houle comprend en outre une étape de filtrage desdites mesures dudit au moins un capteur.

Conformément à un mode de réalisation, ledit procédé de prédiction de la caractéristique résultante de la houle comprend en outre une étape de détermination d'un degré de confiance de ladite prédiction de ladite caractéristique résultante de la houle au moyen dudit modèle de prédiction de la houle.

Selon une mise en œuvre, ladite caractéristique résultante de ladite houle est l'élévation de ladite houle en au moins un point et/ou la valeur du signal dudit au moins un capteur.

Selon une option de réalisation, ledit système flottant est équipé d'une pluralité de capteurs, et on mesure ladite variation de ladite houle au moyen de chaque capteur.

Selon une variante, on détermine pour une durée future la valeur à venir dudit signal de chaque capteur en prenant en compte uniquement les mesures dudit capteur concerné.

Alternativement, on détermine pour une durée future la valeur à venir dudit signal de chaque capteur en prenant en compte les mesures de tous les capteurs.

Selon un mode de réalisation, on détermine ledit modèle de prédiction par une approche de prédiction basée sur le spectre de ladite houle.

En outre, l'invention concerne un procédé de commande d'un système houlomoteur, qui convertit l'énergie de la houle en énergie électrique, pneumatique ou hydraulique, dans lequel on prédit une caractéristique résultante de la houle sur ledit système houlomoteur au moyen du procédé de prédiction d'une caractéristique résultante selon l'une des caractéristiques précédentes, et on commande ledit système houlomoteur en fonction de ladite caractéristique résultante prédite de ladite houle.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé de prédiction d'une caractéristique de la houle selon un mode de réalisation de l'invention.

La figure 2 illustre les étapes du procédé de prédiction d'une caractéristique de la houle selon un deuxième mode de réalisation de l'invention.

La figure 3 illustre un système houlomoteur apte à mettre en œuvre le procédé selon un mode de réalisation de l'invention.

La figure 4 illustre un navire apte à mettre en œuvre le procédé selon un mode de réalisation de l'invention.

La figure 5 illustre la corrélation entre valeurs mesurées et prédites en fonction de l'horizon de prédiction, pour un spectre de houle avec une période de pic de 2s, la prédiction étant obtenue respectivement par une méthode selon l'art antérieur, et par deux variantes de réalisation du procédé selon l'invention.

La figure 6 illustre la corrélation entre valeurs mesurées et prédites en fonction de l'horizon de prédiction, pour un spectre de houle avec une période de pic de 3s, la prédiction étant obtenue respectivement par une méthode selon l'art antérieur, et par deux variantes de réalisation du procédé selon l'invention.

La figure 7 illustre la corrélation entre valeurs mesurées et prédites en fonction de l'horizon de prédiction, pour un spectre de houle avec une période de pic de 4s, la prédiction étant obtenue respectivement par une méthode selon l'art antérieur, et par deux variantes de réalisation du procédé selon l'invention.

La figure 8 illustre la corrélation entre valeurs mesurées et prédites en fonction de l'horizon de prédiction, pour un spectre de houle avec une période de pic de 5s, la prédiction étant obtenue respectivement par une méthode selon l'art antérieur, et par deux variantes de réalisation du procédé selon l'invention.

## Description des modes de réalisation

La présente invention concerne un procédé de prédiction d'une caractéristique résultante de la houle sur un système flottant soumis au mouvement de la houle. La caractéristique résultante prédite peut être notamment la force exercée par la houle sur le système flottant, l'élévation de la houle à l'emplacement du système flottant ou à un emplacement proche du système flottant, le mouvement du système flottant, la valeur d'un signal d'un capteur (c'est-à-dire la mesure d'un capteur), ou toute caractéristique analogue...

Le système flottant peut être un système houlomoteur (sous toutes les formes envisageables), une plate-forme flottante (par exemple une plateforme utilisée dans l'industrie pétrolière), ou une éolienne flottante (« offshore »), un navire, un véhicule amphibie, un hydravion, ou tout système flottant analogue. Dans la suite de la description, le procédé de prédiction est décrit, de manière non limitative, pour un système houlomoteur. Le système houlomoteur convertit l'énergie de la houle en énergie électrique, pneumatique ou hydraulique. Selon une conception, le système houlomoteur peut comprendre un moyen mobile connecté à une machine électrique, pneumatique ou hydraulique, pour la récupération d'énergie et pour la commande du système houlomoteur. Toutefois, tous les modes de réalisation décrits sont adaptés à tous les systèmes flottants ou oscillants.

Le procédé selon l'invention est un procédé de prédiction, car il permet de déterminer pour un horizon futur la caractéristique résultante de la houle. Cet horizon futur peut avantageusement être compris entre 1 s et 5 min.

Dans la suite de la description et pour les revendications, les termes vagues, flots marins, et houle sont considérés comme équivalents.

Selon l'invention, le système flottant est équipé d'au moins un capteur mesurant la variation de la houle ou une caractéristique résultante de la houle. En d'autres termes, le capteur est apte à mesurer un paramètre lié à la houle, par exemple l'élévation de la surface de la mer, une force liée à la houle, le mouvement du système flottant, etc. Un tel capteur peut être choisi notamment parmi :

- Un radar, qui donne une image de l'élévation de la surface de la mer dans une zone environnante du système flottant. Un tel capteur peut être utilisé notamment lorsque le système flottant est un navire ou une plateforme flottante,
- Un capteur de déformation d'au moins une partie déformable du système flottant, par exemple, il peut s'agir d'un capteur placé sur une paroi déformable d'un système houlomoteur flexible pour lequel la conversion de l'énergie est distribuée le long de la paroi (et réalisée à travers la déformation même de la paroi) ou localisée à un endroit précis du système houlomoteur (et réalisée par une machine de conversion)
- Un capteur de type LiDAR (télédétection par Laser), capable de donner une image de l'élévation de la surface de la mer dans une zone environnante du système flottant ;
- Un capteur optique de type caméra stéréo, capable de donner une image de l'élévation de la surface de la mer dans une zone environnante du système flottant ;
- Un capteur de déplacement d'une partie mobile du système flottant, par exemple, dans le cas d'un système houlomoteur avec une partie mobile qui oscille avec la houle,
- Un capteur de pression au sein au moins d'une partie mobile du système flottant, il peut s'agir par exemple, d'un capteur de pression au sein d'un système de conversion pneumatique de l'énergie d'un système houlomoteur,
- Un capteur d'accélération, capable de détection une ou plusieurs modifications d'élévation et/ou d'inclinaison tridimensionnelle du système flottant, cette élévation ou inclinaison étant due à la houle,
- Des moyens de communication sans fil aptes à communiquer avec des bouées équipées de capteurs d'élévation de la houle, etc.

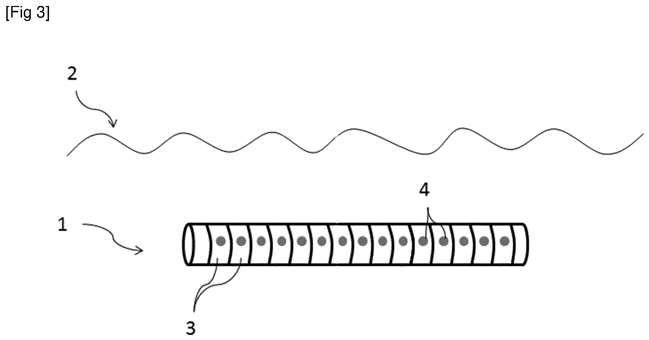

La figure 3 illustre, schématiquement et de manière non limitative, un système houlomoteur apte à mettre en œuvre le procédé de prédiction d'une caractéristique de la houle selon un mode de réalisation de l'invention. Le système houlomoteur 1 se situe sous le niveau de la mer 2 ou à la surface (non représenté). Le système houlomoteur 1 est composé d'une pluralité d'anneaux 3 flexibles articulés les uns par rapport aux autres, de manière à former un tube flexible, dont les déformations liées à la houle génèrent une énergie au moyen de polymères électroactifs ou de matériaux piézoélectriques. En outre, le système houlomoteur 1 comporte une pluralité de capteurs de déformation 4. De manière non limitative, un capteur de déformation 4 peut mesurer les signaux électriques générés par les polymères électroactifs des anneaux 3.

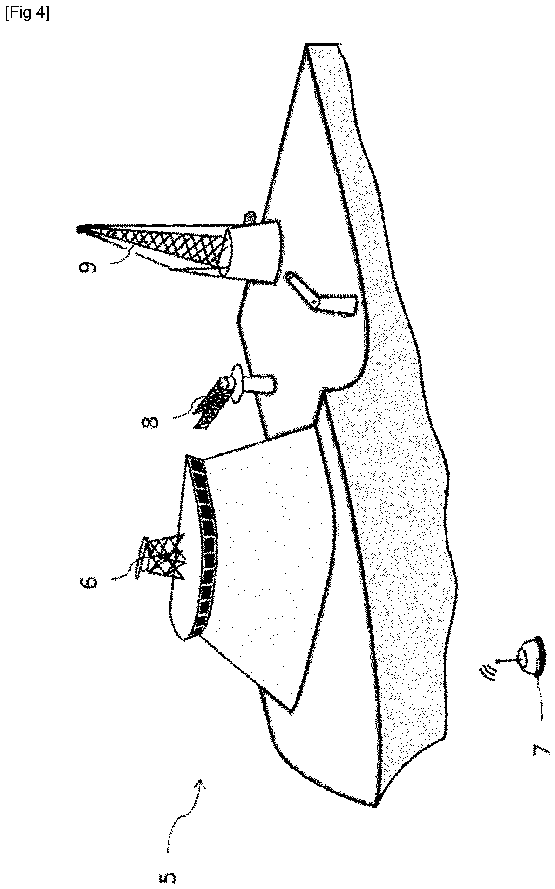

La figure 4 illustre, schématiquement et de manière non limitative, un navire 5 apte à mettre en œuvre le procédé de prédiction d'une caractéristique de la houle selon un mode de réalisation de l'invention. Le navire 5 est équipé d'un radar 4 pour mesurer l'élévation de la mer dans une zone environnante du navire 5. De plus, le navire 5 est équipé de moyens de communication sans fil (non représentés) aptes à communiquer avec la bouée 7 équipée de capteur d'élévation de la houle. Le procédé selon l'invention permet une utilisation optimisée des moyens de levage et grues 8 et 9 prévus sur le navire 5, par exemple en prenant en compte les futurs moments d'accalmie de la houle ou en adaptant les longueurs de levage à la houle prédite en temps réel.

De plus, le procédé selon l'invention met en œuvre une fonction de transfert qui relie la houle incidente aux caractéristiques résultantes de la houle mesurées et prédites. Si le système flottant comporte plusieurs capteurs, alors le procédé selon l'invention met en œuvre une fonction de transfert par capteur. La fonction de transfert traduit la relation entre la houle incidente en entrée, et la mesure du capteur en sortie. En d'autres termes, la fonction de transfert peut être considérée comme un modèle dynamique qui relie la houle incidente, en entrée, à la mesure du capteur, en sortie. Selon un mode de réalisation de l'invention, la fonction de transfert peut être connue initialement. Alternativement, la fonction de transfert peut être obtenue lors d'une étape préalable d'identification du modèle du système flottant et du capteur.

Selon un mode de réalisation de l'invention, pour un système flottant rigide (non déformable), par exemple pour le navire de la figure 4, la fonction de transfert peut ne dépendre que de la fréquence et de la direction angulaire de la houle incidente. Une telle fonction de transfert H peut s'écrire : $H(\omega, \theta)$ avec w la fréquence, et $\theta$ la direction angulaire.

En variante, pour un système flottant flexible (déformable), par exemple pour le système houlomoteur illustré en figure 3, la fonction de transfert peut dépendre en outre de coordonnées réelles supplémentaires. Une telle fonction de transfert H peut s'écrire $H(\chi, \omega, \theta)$ avec $\chi$ les coordonnées réelles supplémentaires, w la fréquence, et $\theta$ la direction angulaire. Par exemple, pour le système houlomoteur illustré en figure 3, $\chi$ désigne la position le long du système houlomoteur.

Selon l'invention, le procédé de prédiction de la caractéristique résultante de la houle comporte les étapes suivantes :

- Mesure en temps réel
- Mise à jour d'un modèle spectral de la houle
- Détermination d'un modèle de prédiction de la houle
- Prédiction de la caractéristique résultante de la houle

Ces étapes seront détaillées dans la suite de la description. Les étapes de mise à jour d'un modèle spectral de la houle, de détermination d'un modèle de prédiction, et de prédiction peuvent être mise en œuvre par des moyens informatiques, notamment un calculateur ou un ordinateur prévu sur le système flottant, ou en communication sans fil avec le système flottant. Les étapes de mesure en temps réel et de prédiction de la caractéristique résultante de la houle sont mises en œuvre en temps réel à un premier intervalle de temps (c'est-à-dire à une première fréquence) relativement rapide, typiquement de 0,01 s à 1 min. Les étapes de mise à jour du modèle spectral de la houle et de détermination d'un modèle de prédiction de la houle sont mises en œuvre à un deuxième intervalle de temps (c'est-à-dire à une deuxième fréquence), le deuxième intervalle de temps étant supérieur au premier intervalle de temps (la deuxième fréquence est inférieure à la première fréquence), typiquement de 10 min à 24 h, de préférence de 10 min à 6 h.

Le procédé selon l'invention met en œuvre une approche dite SPB (de l'anglais « spectrum-based predictor », pouvant être traduit par approche de prédiction basée sur un spectre, en l'occurrence le spectre de la houle). Une telle approche repose sur l'hypothèse que les variables physiques forment un processus Gaussien stationnaire, ce qui est une hypothèse standard en océanographie et en ingénierie maritime. Sous cette hypothèse, il est possible de déterminer un prédicteur statistiquement optimal, à partir du modèle spectral de la houle, et des fonctions de transfert caractérisant les variables observées et prédites.

En pratique, il est possible de mettre en œuvre les étapes avec deux intervalles de temps différents, car le spectre de la houle, et par conséquent le prédicteur optimal, peuvent être considérés comme stationnaire sur un horizon de quelques dizaines de minutes. Ainsi, il n'est pas nécessaire de mettre à jour le modèle spectral de la houle en temps réel avec une fréquence élevée. Grâce à la mise en œuvre des étapes sur des échelles de temps différentes, on peut limiter le nombre de calculs à effectuer au premier intervalle de temps, ce qui permet la prédiction de la caractéristique de la houle avec un faible temps de calcul, compatible avec le premier intervalle de temps.

De préférence, le premier intervalle de temps peut être compris entre 0,01 s et 10 min. Cet intervalle de temps peut valoir par exemple 1 s. Ces valeurs permettent une prédiction de la houle en temps réel.

De préférence, le deuxième intervalle de temps peut être compris entre 10 min et 24 h, de préférence entre 10 min et 6 h. Cet intervalle de temps peut valoir par exemple 1 h. Ces valeurs permettent de limiter la fréquence de la mise à jour du modèle spectral tout en conservant une bonne représentativité du modèle spectral de la houle, et par conséquent une bonne fiabilité de la prédiction de la caractéristique résultante de la houle.

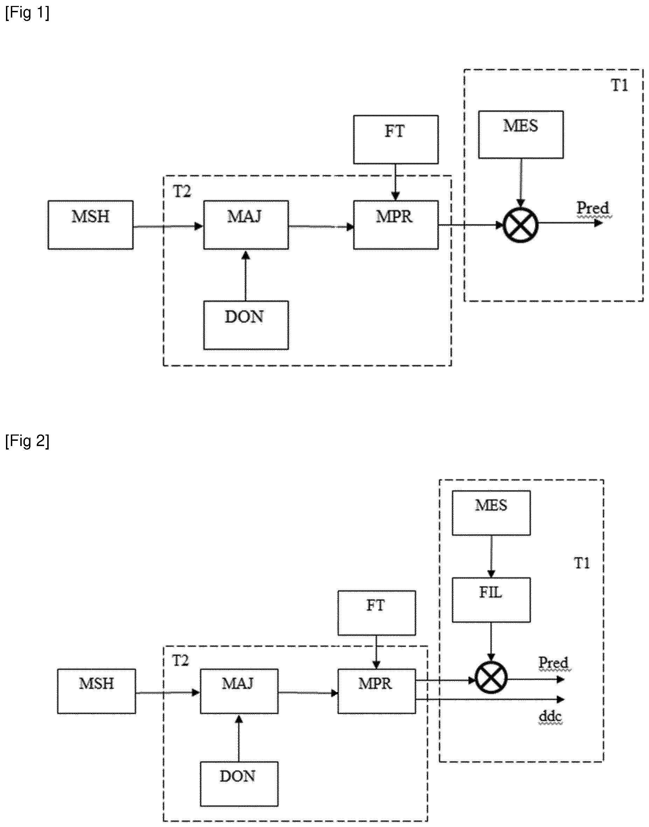

La figure 1 illustre, schématiquement et de manière non limitative, les étapes du procédé de prédiction selon un mode de réalisation de l'invention. Le procédé de prédiction comprend une étape de mesure MES en temps réel à un intervalle de temps T1 de la variation de la houle au moyen d'au moins un capteur. Pour ce procédé, on met en œuvre en outre un modèle spectral de la houle MSH, qu'on met à jour MAJ à un intervalle de temps T2, à partir de données DON, qui peuvent être des données météorologiques ou des données mesurées par au moins un capteur. L'intervalle de temps T2 est supérieur à l'intervalle de temps T1. Le procédé met également en œuvre une fonction de transfert FT qui relie la houle incidente à la mesure du ou des capteur(s) considéré(s), pour déterminer, à un intervalle de temps T2, un modèle de prédiction de la houle MPR. Ensuite, ce modèle de prédiction de la houle MPR est appliqué aux mesures MES à un intervalle de temps T1 pour en déduire la prédiction Pred de la caractéristique résultante de la houle pour une durée future (pour un horizon futur).

Selon un mode de réalisation de l'invention, le procédé de prédiction d'une caractéristique résultante de la houle peut comprendre, en outre, une étape de filtrage des mesures. Le filtrage permet notamment de réduire le bruit, de réduire les disparités de mesure entre les éventuels capteurs, etc. Il peut s'agir notamment d'un filtrage FFT (transformée de Fourier rapide), d'un filtrage spatial des données à l'aide, par exemple, de fonctions polynomiales comme les polynômes de Tchebychev, ou de tout filtre analogue.

Conformément à une mise en œuvre de l'invention, le procédé de prédiction d'une caractéristique résultante de la houle peut comporter en outre une étape de détermination d'un degré de confiance de ladite prédiction. Ce degré de confiance peut être déterminé au moyen du modèle de prédiction de la houle, à intervalle de temps T2. Cette étape permet de caractériser l'erreur quadratique moyenne commise pour chaque variable prédite et chaque horizon de prédiction.

La figure 2 illustre, schématiquement et de manière non limitative, les étapes du procédé de prédiction selon un deuxième mode de réalisation de l'invention. Le deuxième mode de réalisation de l'invention comporte les deux étapes facultatives (filtrage, degrés de confiance) décrites ci-dessus. Ces deux étapes sont indépendantes. En variante, le procédé selon l'invention peut comporter une seule de ces étapes. Le procédé de prédiction comprend une étape de mesure MES en temps réel à un intervalle de temps T1 de la variation de la houle au moyen d'au moins un capteur. Cette étape de mesure MES est suivie par une étape de filtrage des mesures FIL. Pour ce procédé, on met en œuvre en outre un modèle spectral de la houle MSH, qu'on met à jour MAJ à un intervalle de temps T2, à partir de données DON, qui peuvent être des données météorologiques ou des données mesurées par au moins un capteur. L'intervalle de temps T2 est supérieur à l'intervalle de temps T1. Le procédé met également en œuvre une fonction de transfert FT qui relie la houle incidente à la mesure du ou des capteur(s) considéré(s), pour déterminer, en temps réel et à un intervalle de temps T2, un modèle de prédiction de la houle MPR, ainsi qu'un degré de confiance ddc de la prédiction de la caractéristique résultante de la houle. Ensuite, ce modèle de prédiction de la houle MPR est appliqué aux mesures MES à un intervalle de temps T1, pour en déduire la prédiction Pred de la caractéristique résultante de la houle pour une durée future (pour un horizon futur).

1) Mesure en temps réel

Lors de cette étape, on mesure en temps réel à un premier intervalle de temps la variation de la houle au moyen d'au moins un capteur. Ainsi, on obtient au moins une variation de la houle en temps réel avec une fréquence de mesure élevée (par rapport à la fréquence de mise à jour du modèle spectral de la houle).

Selon un mode de réalisation de l'invention, les mesures peuvent être mémorisées, notamment dans des moyens informatiques, par exemple dans une mémoire informatique d'un ordinateur ou d'un calculateur. Ainsi, la prédiction peut prendre en compte les mesures passées, ce qui permet une prédiction plus précise de la caractéristique résultante de la houle.

2) Filtrage de la mesure

Lors de cette étape facultative, on met en œuvre un filtrage des mesures. Le filtrage permet notamment de réduire le bruit, de réduire les éventuelles disparités de mesure entre les capteurs, etc. Il peut s'agir notamment d'un filtrage FFT (transformée de Fourier rapide), d'un filtrage spatial des données à l'aide, par exemple, de fonctions polynomiales comme les polynômes de Tchebychev, ou de tout filtre analogue.

Cette étape peut également être mise en œuvre par des moyens informatiques (ordinateur ou calculateur).

3) Mise à jour d'un modèle spectral de la houle

Lors de cette étape, on met à jour, à un deuxième intervalle de temps (supérieur au premier intervalle de temps), un modèle spectral de la houle. Le modèle spectral de la houle est mis à jour à partir de modèles météorologiques et/ou à partir d'au moins une mesure d'au moins un capteur, notamment un capteur utilisé pour l'étape 1). Ainsi, ce modèle spectral de la houle permet de tenir compte de la variabilité de l'état de la mer.

Le modèle spectral de la houle est une densité spectrale de puissance (DSP). Par définition la densité spectrale de puissance est le carré du module de la transformée de Fourier divisée par la largeur de la bande spectrale, elle-même égale à l'inverse du temps d'intégration. Ce modèle spectral caractérise les propriétés de la houle en tant que processus aléatoire. Il ne s'agit pas de modes d'oscillation comme dans une décomposition harmonique (qui représente un système déterministe avec un nombre fini de modes oscillatoires), ni une identification d'une fréquence dominante. Le document : Athanasios PAPOULIS et S Unnikrishna PILLAI. Probability, random variables, and stochastic processes. Tata McGraw-Hill Education, 2002 concerne les processus aléatoires et leur représentation spectrale.

Cette représentation stochastique de la houle permet de combiner une multiplicité de signaux mesurés, en considérant que ceux-ci forment conjointement un processus aléatoire multi-dimensionnel. C'est ainsi que le procédé selon l'invention permet de traiter et de combiner au moins deux séries temporelles ou au moins deux points de mesure (par exemple les nombreux points d'observation d'un radar, ou bien plusieurs capteurs différents, etc.) au lieu d'une seule série temporelle, comme cela peut être le cas dans l'art antérieur.

Le modèle spectral de la houle suppose que la houle est un processus gaussien à moyenne nulle. Une telle hypothèse est vérifiée dans la majorité des conditions de mesure, à l'exception des tempêtes majeures, ou en eau très peu profonde. Par conséquent, l'application d'une telle hypothèse rend la prédiction de la caractéristique résultante de la houle fiable. De plus, on considère que, pendant le deuxième intervalle de temps, le champ de vagues est stationnaire, c'est-à-dire que ses propriétés statistiques ne varient guère. Etant donné l'hypothèse de processus gaussien, l'hypothèse de stationnarité peut se résumer à la stationnarité de la moyenne et de la fonction d'auto-covariance. En outre, on peut considérer que le champ de vagues est homogène dans la zone étudiée (« dans l'espace » au vu de l'hypothèse de stationnarité). Ainsi, la covariance de l'élévation de la surface libre de la mer prise à deux positions différentes, ne dépend que de la position relative de ces deux points. Le champ de houle peut être considéré homogène sur des distances de quelques kilomètres. Sous ces hypothèses, l'état de mer est entièrement caractérisé par le spectre de l'élévation de surface libre $\eta$, qui dépend de la fréquence et de la direction angulaire dans le plan horizontal, et qui s'écrit donc : $S_{\eta\eta}(\omega, \theta)$ où $\omega$ la fréquence, et $\theta$ la direction angulaire. Lors de la mise à jour du modèle spectral de la houle, c'est $S_{\eta\eta}$ qui est mis à jour. $S_{\eta\eta}$ peut être fourni directement par des agences de prédiction météorologiques comme l'ECMWF (https://www.ecmwf.int/en/forecasts), ou estimé à partir de mesures locales effectuées au moyen d'au moins un capteur, par exemple un capteur utilisé pour l'étape 1.

### 4) Détermination d'un modèle de prédiction de la houle

Lors de cette étape, on détermine un modèle de prédiction de la houle au moyen de la fonction de transfert et du modèle spectral de la houle mis à jour. Le modèle de prédiction relie les mesures issues d'un ou plusieurs capteurs à une prédiction d'une caractéristique résultante de la houle. En raison de la mise à jour du modèle spectral de la houle à un deuxième intervalle de temps, le modèle de prédiction de la houle est déterminé au deuxième intervalle de temps. En d'autres termes, le modèle de prédiction de la houle reste valable pendant la durée du deuxième intervalle de temps.

Le modèle de prédiction de la houle peut dépendre d'un ou de plusieurs capteurs. Avec moins de capteurs, le modèle de prédiction de la houle est plus simple et nécessite des calculs moins complexes, ce qui facilite sa mise en œuvre en temps réel. Avec davantage de capteurs, la prédiction peut être plus précise.

Ainsi, l'invention peut exploiter la relation mathématique entre d'une part la Densité Spectrale de Puissance, et d'autre part la corrélation statistique entre les différentes grandeurs mesurées, entre les différentes grandeurs prédites, et entre les grandeurs mesurées et prédites, selon le schéma suivant : DSP - corrélations - prédicteur.

Selon un exemple non limitatif de réalisation, cette étape peut être mise en œuvre au moyen des opérations décrites ci-dessous :

D'abord, on détermine le spectre et le spectre croisé de toutes les variables observées et prédites. Soit $y_1$ le signal d'un capteur utilisé pour la prédiction, ou la caractéristique résultante de la houle que l'on cherche à prédire. Soit $y_2$ le signal d'un capteur utilisé pour la prédiction, ou la caractéristique résultante de la houle que l'on cherche à prédire. D'après les hypothèses de houle gaussienne stationnaire, $y_1$ et $y_2$ sont des processus aléatoires gaussiens stationnaires à moyenne nulle. Le spectre croisé de $y_1$ et $y_2$ se calcule à partir du modèle spectral de la houle, et des fonctions de transfert $H_{\eta y_1}$ et $H_{\eta y_2}$ reliant l'élévation de surface libre respectivement aux variables $y_1$ et $y_2$, de la manière suivante :

$$S_{y_1 y_2}(\omega) = \int_{\theta=0}^{2\pi} H_{\eta y_1}(\omega, \theta) S_{\eta\eta}(\omega, \theta) H_{\eta y_2}^*(\omega, \theta) d\theta$$

Avec $\eta$ l'élévation de surface libre, $S_{y_1 y_2}(\omega)$ le spectre croisé des signaux $y_1$ et $y_2$ (éventuellement, $y_1$ et $y_2$ désignent le même signal), $S_{\eta\eta}$ le spectre de la houle, $\omega$ la fréquence, et $\theta$ la direction angulaire, H la fonction de transfert, et H* sa conjuguée. On effectue ce calcul pour chaque paire de signaux possible, parmi les capteurs utilisés pour la prédiction et la caractéristique résultante de la houle.

Ensuite, on peut appliquer le théorème de Wiener-Khinchine pour déterminer la fonction de covariance de chaque paire de signaux $y_1$ et $y_2$ :

$$\begin{cases} \mathbf{S_{zz}}(\omega) = \int_{-\infty}^{\infty} \mathbf{r_{zz}}(\tau) e^{-i\omega t} d\tau \\ \mathbf{r_{zz}}(\omega) = \frac{1}{2\pi} \int_{-\infty}^{\infty} \mathbf{S_{zz}}(\omega) e^{i\omega t} d\omega \end{cases}$$

$$r_{y_1 y_2}(\tau) = \frac{1}{2\pi} \int_{-\infty}^{\infty} S_{y_1 y_2}(\omega) e^{i\omega t} d\omega$$

Avec $\tau$ un intervalle de temps, $S_{y_1 y_2}(\omega)$ le spectre croisé, $r_{y_1 y_2}$ la fonction de variance-covariance, et z un signal (z peut valoir y, ou $y_2$).

Dans la suite de la description, l'indice o fait référence aux signaux observés et l'indice p fait référence aux signaux prédits.

Grâce à cette étape, on peut construire les matrices $r_{oo}(\tau)$, $r_{op}(\tau)$ et $r_{pp}(\tau)$ : l'élément $(i, j)$ de la matrice $r_{oo}(\tau)$ est la fonction de covariance des i-ème et j-èmes signaux observés ; l'élément $(i,j)$ de la matrice $r_{op}(\tau)$ est la fonction de covariance du i-ème signal observé et du j-ème signal prédit (caractéristique résultante de la houle) ; enfin l'élément $(i,j)$ de la matrice $r_{pp}(\tau)$ est la fonction de covariance des i-ème et j-èmes signaux prédits (caractéristiques résultantes de la houle).

Les valeurs observées (mesurées) forment un vecteur aléatoire $Z_o(t)$, et les valeurs que l'on souhaite prédire forment un vecteur aléatoire $Z_p(t)$. Ces deux vecteurs sont conjointement gaussiens à moyenne nulle, entièrement caractérisés par leur matrices de covariance, que l'on note $\Sigma_{oo}$, $\Sigma_{pp}$ et $\Sigma_{op} = \Sigma_{po}^{T}$.

Soient

$$\tau_o = (\underline{\tau_o}\ \underline{\tau_o} + \Delta t\ \cdots\ \overline{\tau}_o)^{\mathsf{T}} \in \mathbb{R}^{N_o} \text{ et } \tau_p = (\underline{\tau_p}\ \underline{\tau_p} + \Delta t\ \cdots\ \overline{\tau}_p)^{\mathsf{T}} \in \mathbb{R}^{N_p}$$

l'ensemble des instants d'observation et de prédiction par rapport à l'instant présent t. On définit les vecteurs

$$Z_o(t) = \begin{pmatrix} z_o(t - \underline{\tau}_o) \\ \vdots \\ z_o(t - \overline{\tau}_o) \end{pmatrix}$$

qui regroupe les données observées (mesurées) à tous les pas de temps passés que l'on souhaite prendre en compte pour la prédiction, et

$$Z_p(t) = \begin{pmatrix} z_p(t - \underline{\tau}_p) \\ \vdots \\ z_p(t - \overline{\tau}_p) \end{pmatrix}$$

qui regroupe les données que l'on cherche à prédire à tous les horizons de prédiction. Concrètement, le modèle de prédiction doit déterminer comment calculer au mieux $Z_p(t)$ à partir de $Z_o(t)$.

Grâce à l'hypothèse de stationnarité, les matrices de covariance correspondant à $Z_o(t)$ et $Z_p(t)$ ne dépendent pas de t. De plus, elles sont Toeplitz par blocs, et peuvent être structurées de la manière suivante :

$$\mathbf{\Sigma}_{oo} = \begin{pmatrix} \mathbf{A}_{1,1} & \cdots & \mathbf{A}_{1,N_o} \\ \vdots & \ddots & \vdots \\ \mathbf{A}_{N_o,1} & \cdots & \mathbf{A}_{N_o,N_o} \end{pmatrix} \in \mathbb{R}^{M_o N_o \times M_o N_o}$$

$$\boldsymbol{\Sigma}_{pp} = \begin{pmatrix} \mathbf{B}_{1,1} & \cdots & \mathbf{B}_{1,N_p} \\ \vdots & \ddots & \vdots \\ \mathbf{B}_{N_p,1} & \cdots & \mathbf{B}_{N_p,N_p} \end{pmatrix} \in \mathbb{R}^{M_p N_p \times M_p N_p}$$

$$\boldsymbol{\Sigma}_{op} = \begin{pmatrix} \mathbf{C}_{1,1} & \cdots & \mathbf{C}_{1,N_p} \\ \vdots & \ddots & \vdots \\ \mathbf{C}_{N_o,1} & \cdots & \mathbf{C}_{N_o,N_p} \end{pmatrix} \in \mathbb{R}^{M_o N_o \times M_p N_p}$$

$$\boldsymbol{\Sigma}_{po} = \boldsymbol{\Sigma}_{op}^{\mathsf{T}}$$

Avec les blocs A, B, C définis par :

$$\begin{cases} \mathbf{A}_{i,j} = \mathbf{r}_{oo}(\tau_o(j) - \tau_o(i)), \ \forall (i,j) \in [1 \,..\, N_o]^2 \\[2mm] \mathbf{B}_{i,j} = \mathbf{r}_{pp}(\tau_p(j) - \tau_p(i)), \ \forall (i,j) \in [1 \,..\, N_p]^2 \\[2mm] \mathbf{C}_{i,j} = \mathbf{r}_{op}(\tau_p(j) - \tau_o(i)), \ \forall (i,j) \in [1 \,..\, N_o] \times [1 \,..\, N_p] \end{cases}$$

Grâce à l'hypothèse de signaux gaussiens stationnaires, le meilleur prédicteur reliant $Z_p(t)$ à $Z_o(t)$ est une opération linéaire sur les composantes de $Z_o(t)$, comme détaillé dans l'étape 6. Cette opération linéaire est effectué grâce à une matrice P, qui peut être obtenue par l'équation :

$$\mathbf{P} = \boldsymbol{\Sigma}_{po} \boldsymbol{\Sigma}_{oo}^{\dagger}$$

Dans cette équation l'exposant « dague » désigne l'inverse matriciel (si la matrice est inversible) ou pseudo inverse (en effet, si la matrice n'est pas inversible, ce qui indique que l'invention contenue dans $Z_o(t)$ est statistiquement redondante). On remarque que toutes les opérations menant au calcul de la matrice de prédiction P peuvent être effectuées à un intervalle de temps T2, car elles ne dépendent que du modèle spectral de la houle et des fonctions de transfert.

Ces opérations peuvent être adaptées aux hypothèses considérées, et peuvent être également adaptées à la fonction de transfert pour un système flottant flexible, notamment en prenant en compte les données supplémentaires.

5) Détermination de l'indice de confiance

Lors de cette étape facultative, on peut déterminer un indice de confiance de la prédiction de la caractéristique résultante de la houle. Ce degré de confiance peut être déterminé au moyen du modèle de prédiction de la houle. Cette étape permet de caractériser l'erreur commise. En raison de la mise à jour du modèle spectral de la houle à un deuxième intervalle de temps, l'indice de confiance est déterminé au deuxième intervalle de temps. En d'autres termes, l'indice de confiance reste valable pendant la durée du deuxième intervalle de temps.

Cette étape peut également être mise en œuvre par des moyens informatiques (ordinateur, calculateur).

Selon un exemple non limitatif de réalisation de cette étape, on peut déterminer l'indice de confiance à partir de la matrice de covariance $\Sigma_{p/o}$ de l'erreur de prédiction, qui peut être calculée de la manière suivante :

$$\boldsymbol{\Sigma}_{p|o} = \boldsymbol{\Sigma}_{pp} - \boldsymbol{\Sigma}_{po}\boldsymbol{\Sigma}_{oo}^{\dagger}\boldsymbol{\Sigma}_{op}$$

Dans cette équation l'exposant « dague » désigne l'inverse matriciel (si la matrice est inversible) ou pseudo inverse (en effet, si la matrice n'est pas inversible, ce qui indique que l'invention contenue dans $Z_o(t)$ est statistiquement redondante). La matrice $\Sigma_{p/o}$ contient les valeurs de l'erreur quadratique moyenne pour chaque paire d'horizons de prédiction et chaque paire de signaux prédits (caractéristiques résultantes de la houle).

6) Prédiction de la caractéristique résultante de la houle

Lors de cette étape, on prédit, en temps réel, pour un horizon futur (pour une durée future) la caractéristique résultante de la houle en appliquant le modèle de prédiction de la houle déterminé à l'étape 4) aux mesures réalisées à l'étape 1), et éventuellement filtrées à l'étape 2). Ainsi, on obtient pour un horizon futur, la caractéristique résultante de la houle sur la base d'un modèle fiable et de mesures. Par conséquent, la prédiction de la caractéristique résultante de la houle est fiable.

Cette étape est mise en œuvre au premier intervalle de temps (c'est-à-dire pour chaque nouvelle mesure), le modèle de prédiction restant identique pendant le deuxième intervalle de temps. Ainsi, on utilise un même modèle de prédiction pour plusieurs prédictions.

Pour cette étape, on peut mettre en œuvre l'équation suivante :

$$\tilde{Z}_p(t) = PZ_o(t)$$

Avec P le modèle de prédiction déterminé à l'étape 4), $Z_o(t)$ les valeurs mesurées, et $\tilde{Z}_p(t)$ les valeurs prédites de la caractéristique résultante.

En outre, l'invention concerne un procédé de commande d'un système houlomoteur, qui convertit l'énergie des vagues en énergie électrique, pneumatique ou hydraulique. Le procédé de commande comprend une étape de prédiction de la houle selon l'une des variantes ou des combinaisons de variantes décrites précédemment, avec au moins les étapes suivantes :

  1) Mesure en temps réel,

  2) Mise à jour d'un modèle spectral de la houle,

  3) Détermination d'un modèle de prédiction de la houle, et

  4) Prédiction de la caractéristique résultante de la houle.

Le procédé de commande selon l'invention comprend également une étape de commande du système houlomoteur en fonction de la caractéristique (force, élévation ...) de la houle, de manière à optimiser la récupération d'énergie. La commande peut consister en un contrôle du moyen mobile du système houlomoteur, par exemple au moyen d'une machine électrique, pneumatique ou hydraulique, nommé système PTO (de l'anglais « power take-off »). Ce système PTO influence le mouvement du moyen mobile et permet de transférer l'énergie mécanique au réseau électrique, pneumatique ou hydraulique. La commande prédictive par modèle (MPC) est un exemple de méthode de commande de systèmes houlomoteurs nécessitant une prédiction de la vague réalisée en temps réel. Le procédé de commande selon l'invention peut être également appliqué à un système houlomoteur appartenant à la catégorie de systèmes houlomoteurs avec colonnes d'eau oscillantes (OWC de l'anglais Oscillating Water Column) ou tout autre type de système houlomoteur.

Le procédé de commande selon l'invention est particulièrement adapté à un système houlomoteur tel que décrit en relation avec la figure 3. En effet, un tel système est équipé d'un grand nombre de capteurs. De plus, le procédé selon l'invention permet de bien synchroniser la charge et la décharge des polymères électro-actifs ou de matériaux piézoélectriques

En effet, le procédé de commande selon l'invention permet une commande optimale, car le procédé de prédiction selon l'invention propose une méthode pour prédire la force, ou l'élévation, que la houle exercera sur le moyen mobile sur un horizon futur à partir de valeurs mesurées dans le passé et d'un modèle spectral de la houle.

De plus, la présente invention concerne un procédé de commande de l'appontage ou du transfert d'un dispositif sur ou depuis un navire ou une plateforme flottante. Pour ce procédé on peut mettre en œuvre les étapes suivantes :

- On prédit une caractéristique résultante de la houle pour le navire ou la plateforme flottante au moyen du procédé de prédiction selon l'une quelconque des variantes de réalisations décrites précédemment,
- On détermine un moment futur pour lequel la caractéristique résultante de la houle varie peu à partir de la prédiction de la caractéristique résultante de la houle, et
- On réalise l'appontage ou le transfert le moment déterminé à l'étape précédente.

La présente invention concerne également un procédé de commande d'une éolienne flottante, dans lequel on met en œuvre les étapes suivantes :

- On prédit une caractéristique résultante de la houle pour l'éolienne flottante au moyen du procédé de prédiction selon l'une quelconque des variantes de réalisations décrites précédemment,
- On en déduit l'action de la houle sur le flotteur de l'éolienne flottante, et
- On commande l'éolienne flottante, notamment l'angle d'inclinaison des pales, de manière à réduire les efforts sur la structure de l'éolienne en fonction de la prédiction de l'action de la houle sur le flotteur.

**Exemple**

Les caractéristiques et avantages du procédé selon l'invention apparaîtront plus clairement à la lecture de l'exemple d'application ci-après.

Dans cet exemple, on met en œuvre un système houlomoteur tel qu'illustré en figure 3 sous la forme d'un tube souple flottant de 30m de long et de 1,2 m de diamètre et aligné avec la direction principale de la houle. L'onde de pression créée par le passage de la houle provoque une déformation radiale du tube, et cette déformation est transformée en électricité grâce à des anneaux de polymères électroactifs ou de matériaux piézoélectriques disposés le long du tube. Les signaux électriques des anneaux de polymères électroactifs ou de matériaux piézoélectriques sont enregistrés et servent de capteur de déformation pour la mise en œuvre de la prédiction. De plus, des sondes de houle sont disposées le long du tube afin de mesurer l'élévation de la surface libre.

On réalise quatre expériences avec des spectres de houle distincts, correspondant à quatre états de mer différents, avec des périodes allant de 2 à 5s

Les fonctions de transfert de chaque capteur sont construites à partir d'une partie des signaux de mesure des capteurs.

Ensuite, on détermine la caractéristique de la houle pour un horizon de 10 secondes :

- Au moyen du procédé de l'art antérieur décrit dans la demande de brevet FR 3042889 (WO 2017/071946), cette réalisation est notée AA,
- Au moyen d'une première variante de réalisation de l'invention, pour laquelle le modèle de prédiction de la houle dépend uniquement du capteur considéré, cette réalisation est notée INV1,
- Au moyen d'une deuxième variante de réalisation de l'invention, pour laquelle le modèle de prédiction de la houle dépend des mesures de tous les capteurs, cette réalisation est notée INV2.

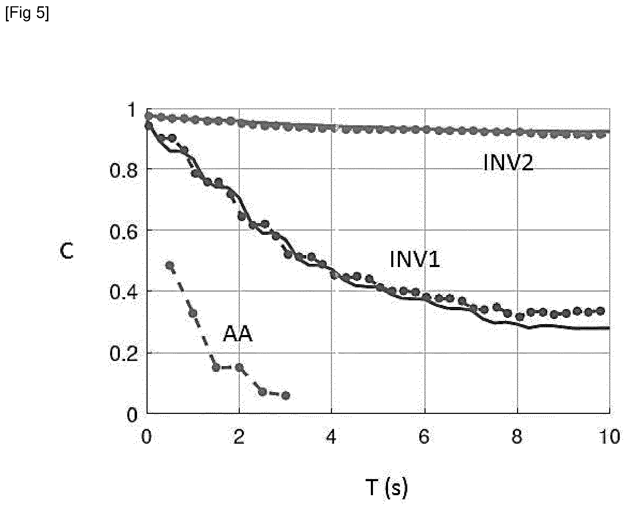

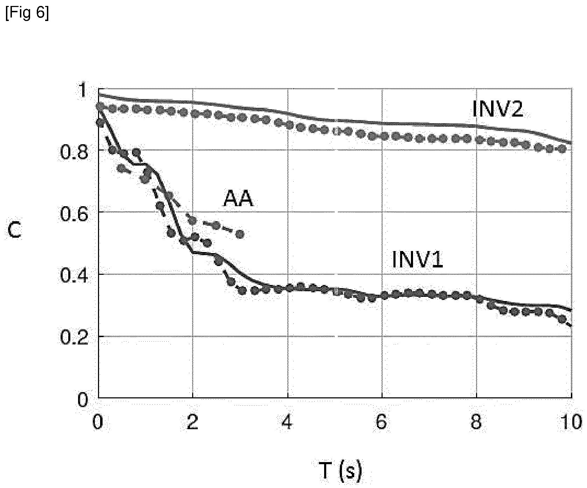

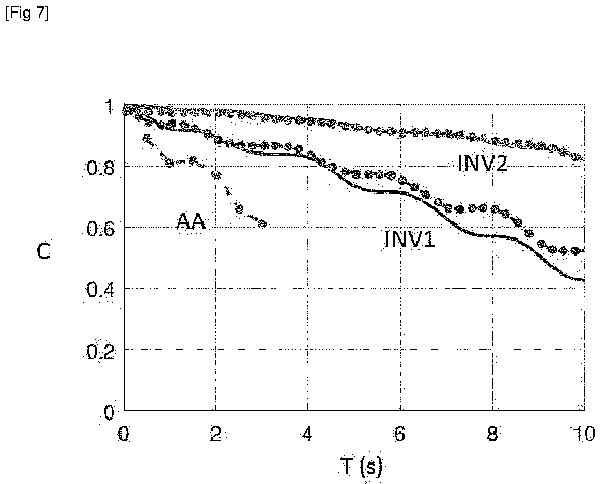

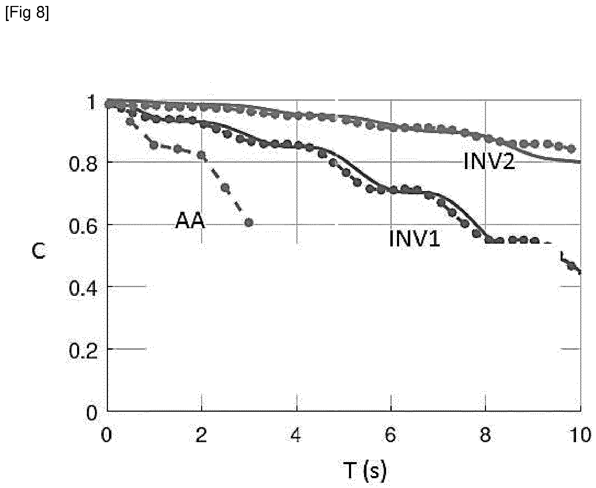

Les figures 5 à 8 illustrent les courbes de corrélation C de ces trois réalisations, en fonction de l'horizon de temps futur T en s. La corrélation traduit la fiabilité de la mesure : plus la corrélation est proche de 1, meilleure est la prédiction. Les figures 5 à 8 concernent la prédiction pour un capteur situé vers l'extrémité aval du tube selon la direction de propagation de la houle. Sur ces figures, les prédictions théoriques sont représentées par des lignes continues, et les prédictions expérimentales sont représentées par des lignes discontinues. La figure 5 correspond au la houle avec une période de 2s, la figure 6 correspond à la houle avec une période de 3s, la figure 7 correspond à la houle avec une période de 4s et la figure 8 correspond à la houle avec une période de 5s.

On remarque sur ces figures, que le procédé selon l'invention (INV1 et INV2) permet une meilleure corrélation que le procédé selon l'art antérieur, la deuxième variante de réalisation de l'invention (INV2) ayant une meilleure corrélation que la première variante de réalisation (INV1).

Les résultats sont similaires pour d'autres capteurs disposés à d'autres positions sur le tube. Par conséquent, le procédé selon l'invention permet une prédiction précise d'une caractéristique de la houle.

## Revendications

1. Procédé de prédiction d'une caractéristique résultante de la houle pour un système flottant soumis à ladite houle, ledit système flottant étant pourvu d'au moins un capteur mesurant la variation de ladite houle, ledit procédé de prédiction de ladite caractéristique résultante de ladite houle mettant en œuvre une fonction de transfert (FT) qui relie ladite caractéristique résultante de ladite houle à une mesure dudit au moins un capteur, **caractérisé en ce qu'**on met en œuvre les étapes suivantes :

   a) On mesure (MES) en temps réel à un premier intervalle de temps (T1) la variation de ladite houle au moyen dudit au moins un capteur ;
   b) On met à jour (MAJ) à un deuxième intervalle de temps (T2) un modèle spectral de ladite houle (MSH), ledit modèle spectral de ladite houle (MSH) étant mis à jour à partir de données (DON) météorologiques et/ou à partir d'au moins une mesure dudit au moins un capteur, et ledit deuxième intervalle de temps (T2) étant supérieur au premier intervalle de temps (T1) ;
   c) On détermine un modèle de prédiction de la houle (MPR) au moyen de ladite fonction de transfert (FT) et dudit modèle spectral de ladite houle (MSH) mis à jour ; et
   d) On détermine, en temps réel, ladite caractéristique résultante de ladite houle pour une durée future au moyen dudit modèle de prédiction de la houle (MPR) appliqué auxdites mesures en temps réel (MES).

2. Procédé de prédiction d'une caractéristique résultante de la houle selon la revendication 1, dans lequel ledit système flottant est un système houlomoteur (1), qui convertit l'énergie de la houle en énergie électrique, pneumatique ou hydraulique, un navire (5), une plateforme flottante, une éolienne flottante, un véhicule amphibie ou un hydravion.

3. Procédé de prédiction d'une caractéristique résultante de la houle selon l'une des revendications précédentes, dans lequel ledit au moins un capteur est un capteur choisi parmi : un radar, un capteur lidar, un capteur de déformation d'au moins une partie déformable dudit système flottant, un capteur de déplacement d'au moins une partie mobile dudit système flottant, un accéléromètre placé sur au moins une partie mobile dudit système flottant, un capteur de pression au sein d'au moins une partie pneumatique ou hydraulique dudit système flottant.

4. Procédé de prédiction d'une caractéristique résultante de la houle selon l'une des revendications précédentes, dans lequel ledit premier intervalle de temps (T1) est compris entre 0,01 s et 10 min.

5. Procédé de prédiction d'une caractéristique résultante de la houle selon l'une des revendications précédentes, dans lequel ledit deuxième intervalle de temps (T2) est compris entre 10 min et 24 h.

6. Procédé de prédiction d'une caractéristique résultante de la houle selon l'une des revendications précédentes, dans lequel ledit procédé de prédiction de la caractéristique résultante de la houle comprend une étape préalable de construction de ladite fonction de transfert (FT).

7. Procédé de prédiction d'une caractéristique résultante de la houle selon l'une des revendications précédentes, dans lequel ledit procédé de prédiction de la caractéristique résultante de la houle comprend en outre une étape de filtrage (FIL) desdites mesures dudit au moins un capteur.

8. Procédé de prédiction d'une caractéristique résultante de la houle selon l'une des revendications précédentes, dans lequel ledit procédé de prédiction de la caractéristique résultante de la houle comprend en outre une étape de détermination d'un degré de confiance (ddc) de ladite prédiction de ladite caractéristique résultante de la houle au moyen dudit modèle de prédiction de la houle (MPR).

9. Procédé de prédiction d'une caractéristique résultante de la houle selon l'une des revendications précédentes, dans lequel ladite caractéristique résultante de ladite houle est l'élévation de ladite houle en au moins un point et/ou la valeur du signal dudit au moins un capteur.

10. Procédé de prédiction d'une caractéristique résultante de la houle selon l'une des revendications précédentes, dans lequel ledit système flottant est équipé d'une pluralité de capteurs, et on mesure ladite variation de ladite houle au moyen de chaque capteur.

11. Procédé de prédiction d'une caractéristique résultante de la houle selon la revendication 10, dans lequel on détermine pour une durée future la valeur à venir dudit signal de chaque capteur en prenant en compte uniquement les mesures dudit capteur concerné.

12. Procédé de prédiction d'une caractéristique résultante de la houle selon la revendication 10, dans lequel on détermine pour une durée future la valeur à venir dudit signal de chaque capteur en prenant en compte les mesures de tous les capteurs.

13. Procédé de prédiction d'une caractéristique résultante de la houle selon l'une des revendications précédentes, dans lequel on détermine ledit modèle de prédiction par une approche de prédiction basée sur le spectre de ladite houle.

14. Procédé de commande d'un système houlomoteur (1), qui convertit l'énergie de la houle en énergie électrique, pneumatique ou hydraulique, dans lequel on prédit une caractéristique résultante de la houle sur ledit système houlomoteur (1) au moyen du procédé de prédiction d'une caractéristique résultante selon l'une des revendications précédentes, et on commande ledit système houlomoteur (1) en fonction de ladite caractéristique résultante prédite de ladite houle.

**Patentansprüche**

1. Verfahren zum Vorhersagen eines aus dem Seegang resultierenden Merkmals für ein schwimmendes System, das dem Seegang ausgesetzt ist, wobei das schwimmende System mit mindestens einem Sensor versehen ist, der die Änderung des Seegangs misst, wobei das Verfahren zum Vorhersagen des aus dem Seegang resultierenden Merkmals eine Übertragungsfunktion (FT) implementiert, die das aus dem Seegang resultierende Merkmal mit einer Messung des mindestens einen Sensors verknüpft, **dadurch gekennzeichnet, dass** die folgenden Schritte implementiert werden:

   a) Messen (MES) der Änderung des Seegangs mittels des mindestens einen Sensors in Echtzeit in einem ersten Zeitintervall (T1);
   b) Aktualisieren (MAJ) eines Spektralmodells des Seegangs (MSH) in einem zweiten Zeitintervall (T2), wobei das Spektralmodell des Seegangs (MSH) ausgehend von meteorologischer Daten (DON) und/oder ausgehend von mindestens einer Messung des mindestens eines Sensors aktualisiert wird, und wobei das zweite Zeitintervall (T2) größer als das erste Zeitintervall (T1) ist;
   c) Bestimmen eines Vorhersagemodells des Seegangs (MPR) mittels der Übertragungsfunktion (FT) und des aktualisierten Spektralmodells des Seegangs (MSH); und
   d) Bestimmen des aus dem Seegang resultierenden Merkmals in Echtzeit für eine zukünftige Dauer mittels des auf die Echtzeitmessungen (MES) angewandten Vorhersagemodells des Seegangs (MPR).

2. Verfahren zum Vorhersagen eines aus dem Seegang resultierenden Merkmals nach Anspruch 1, wobei das schwimmende System ein Wellenkraftsystem (1), das die Energie des Seegangs in elektrische, pneumatische oder hydraulische Energie umwandelt, ein Schiff (5), eine schwimmende Plattform, eine schwimmende Windkraftanlage, ein Amphibienfahrzeug oder ein Wasserflugzeug ist.

3. Verfahren zum Vorhersagen eines aus dem Seegang resultierenden Merkmals nach einem der vorhergehenden Ansprüche, wobei der mindestens ein Sensor ein Sensor ist, der ausgewählt ist aus: einem Radar, einem Lidar-Sensor, einem Verformungssensor mindestens eines verformbaren Teils des schwimmenden Systems, einem Bewegungssensor mindestens eines beweglichen Teils des schwimmenden Systems, einem Beschleunigungsmesser, der an mindestens einem beweglichen Teil des schwimmenden Systems angebracht ist, einem Drucksensor innerhalb mindestens eines pneumatischen oder hydraulischen Teils des schwimmenden Systems.

4. Verfahren zum Vorhersagen eines aus dem Seegang resultierenden Merkmals nach einem der vorhergehenden Ansprüche, wobei das erste Zeitintervall (T1) zwischen 0,01 s und 10 min beträgt.

5. Verfahren zum Vorhersagen eines aus dem Seegang resultierenden Merkmals nach einem der vorhergehenden Ansprüche, wobei das zweite Zeitintervall (T2) zwischen 10 min und 24 h beträgt.

6. Verfahren zum Vorhersagen eines aus dem Seegang resultierenden Merkmals nach einem der vorhergehenden Ansprüche, wobei das Verfahren zum Vorhersagen des aus dem Seegang resultierenden Merkmals einen vorherigen Schritt des Aufbauens der Übertragungsfunktion (FT) umfasst.

7. Verfahren zum Vorhersagen eines aus dem Seegang resultierenden Merkmals nach einem der vorhergehenden Ansprüche, wobei das Verfahren zum Vorhersagen der aus dem Seegang resultierenden Merkmals ferner einen Schritt des Filterns (FIL) der Messungen des mindestens einen Sensors umfasst.

8. Verfahren zum Vorhersagen eines aus dem Seegang resultierenden Merkmals nach einem der vorhergehenden Ansprüche, wobei das Verfahren zum Vorhersagen des aus dem Seegang resultierenden Merkmals ferner einen Schritt des Bestimmens eines Konfidenzgrades (ddc) der Vorhersage des aus dem Seegang resultierenden Merkmals mittels des Vorhersagemodells des Seegangs (MPR) umfasst.

9. Verfahren zum Vorhersagen eines aus dem Seegang resultierenden Merkmals der Schwellung nach einem der vorhergehenden Ansprüche, wobei das aus dem Seegang resultierende Merkmal die Höhe des Seegangs an mindestens einem Punkt und/oder der Wert des Signals des mindestens einen Sensors ist.

10. Verfahren zum Vorhersagen eines aus dem Seegang resultierenden Merkmals nach einem der vorhergehenden Ansprüche, wobei das schwimmende System mit einer Vielzahl von Sensoren ausgestattet ist und die Änderung des Seegangs mittels jedes Sensors gemessen wird.

11. Verfahren zum Vorhersagen eines aus dem Seegang resultierenden Merkmals nach Anspruch 10, wobei für eine zukünftige Dauer der zukünftige Wert des Signals jedes Sensors bestimmt wird, indem nur die Messungen des betreffenden Sensors berücksichtigt werden.

12. Verfahren zum Vorhersagen eines aus dem Seegang resultierenden Merkmals nach Anspruch 10, wobei für eine zukünftige Dauer der zukünftige Wert des Signals jedes Sensors unter Berücksichtigung der Messungen aller Sensoren bestimmt wird.

13. Verfahren zum Vorhersagen eines aus dem Seegang resultierenden Merkmals nach einem der vorhergehenden Ansprüche, wobei das Vorhersagemodell durch einen auf dem Spektrum des Seegangs beruhenden Vorhersageansatz bestimmt wird.

14. Verfahren zur Steuerung eines Wellenkraftsystems (1), das die Energie der Seegangs in elektrische, pneumatische oder hydraulische Energie umwandelt, wobei ein aus dem Seegang resultierendes Merkmal an dem Wellenkraftsystem (1) mittels des Verfahrens zum Vorhersagen eines resultierenden Merkmals nach einem der vorhergehenden Ansprüche vorhergesagt wird und das Wellenkraftsystem (1) in Abhängigkeit von dem vorhergesagten resultierenden Merkmal des Seegangs gesteuert wird.

**Claims**

1. Method for predicting a characteristic resulting from the sea's swell for a floating system subjected to said swell, said floating system being provided with at least one sensor that measures the variation in said swell, said method for predicting said characteristic resulting from said swell implementing a transfer function (FT) that relates said characteristic resulting from said swell to a measurement of said at least one sensor, **characterized in that** the following steps are implemented:

   a) the variation in said swell is measured (MES) in real time with a first time interval (T1) by means of said at least one sensor;
   b) a spectral model (MSH) of said swell is updated (MAJ) with a second time interval (T2), said spectral model of said swell (MSH) being updated on the basis of meteorological data (DON) and/or on the basis of at least one measurement of said at least one sensor, and said second time interval (T2) being longer than the first time interval (T1);

c) a swell prediction model (MPR) is determined by means of said transfer function (FT) and of said updated spectral model (MSH) of said swell; and

d) said characteristic resulting from said swell is determined, in real time, for a future period, by means of said swell prediction model (MPR) applied to said real-time measurements (MES).

2. Method for predicting a swell-resulting characteristic according to Claim 1, wherein said floating system is a wave-energy converter (1), which converts the energy of the swell into electric, pneumatic or hydraulic energy, a vessel (5), a floating platform, a floating wind turbine, an amphibious vehicle or a seaplane.

3. Method for predicting a swell-resulting characteristic according to either of the preceding claims, wherein said at least one sensor is a sensor chosen from: a radar, a lidar sensor, a sensor of deformation of at least one deformable portion of said floating system, a sensor of movement of at least one mobile portion of said floating system, an accelerometer placed on at least one mobile portion of said floating system, and a sensor of pressure within at least one pneumatic or hydraulic portion of said floating system.

4. Method for predicting a swell-resulting characteristic according to one of the preceding claims, wherein said first time interval (T1) is comprised between 0.01 s and 10 min.

5. Method for predicting a swell-resulting characteristic according to one of the preceding claims, wherein said second time interval (T2) is comprised between 10 min and 24 h.

6. Method for predicting a swell-resulting characteristic according to one of the preceding claims, wherein said method for predicting the swell-resulting characteristic comprises a prior step of constructing said transfer function (FT).

7. Method for predicting a swell-resulting characteristic according to one of the preceding claims, wherein said method for predicting the swell-resulting characteristic further comprises a step of filtering (FIL) said measurements of said at least one sensor.

8. Method for predicting a swell-resulting characteristic according to one of the preceding claims, wherein said method for predicting the swell-resulting characteristic further comprises a step of determining a degree of confidence (ddc) in said prediction of said swell-resulting characteristic by means of said swell prediction model (MPR).

9. Method for predicting a swell-resulting characteristic according to one of the preceding claims, wherein said characteristic resulting from said swell is the elevation of said swell at at least one point and/or the value of the signal of said at least one sensor.

10. Method for predicting a swell-resulting characteristic according to one of the preceding claims, wherein said floating system is equipped with a plurality of sensors, and said variation in said swell is measured by means of each sensor.

11. Method for predicting a swell-resulting characteristic according to Claim 10, wherein, for a future period, the future value of said signal of each sensor is determined taking into account only the measurements of said sensor in question.

12. Method for predicting a swell-resulting characteristic according to Claim 10, wherein, for a future period, the future value of said signal of each sensor is determined taking into account the measurements of all the sensors.

13. Method for predicting a swell-resulting characteristic according to one of the preceding claims, wherein said prediction model is determined using a prediction approach based on the spectrum of said swell.

14. Method for controlling a wave-energy converter (1), which converts the energy of the swell into electric, pneumatic or hydraulic energy, wherein a characteristic resulting from the effect of the swell on said wave-energy converter (1) is predicted by means of the method for predicting a resulting characteristic according to one of the preceding claims, and said wave-energy converter (1) is controlled depending on said predicted characteristic resulting from said swell.

[Fig 1]

[Fig 2]

[Fig 3]

[Fig 4]

[Fig 5]

[Fig 6]

[Fig 7]

[Fig 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- FR 2973448
- US 2010230370 A1
- WO 2009081042 A
- FR 3042889
- WO 2017071946 A

**Littérature non-brevet citée dans la description**

- **FRANCESCO FUSCO** ; **JOHN V RINGWOOD**. Short-term wave forecasting for real-time control of wave energy converters. *Sustainable Energy, IEEE Transactions on*, 2010, vol. 1 (2), 99-106
- **DS SHOOK** ; **C MOHTADI** ; **SL SHAH**. Identification for long-range predictive control. *IEE Proceedings D (Control Theory and Applications)*, 1991, vol. 138, 75-84
- **B FISCHER** ; **P KRACHT** ; **S PEREZ-BECKER**. Online-algorithm using adaptive filters for short-term wave prediction and its implementation. *Proceedings of the 4th International Conference on Ocean Energy (ICOE), Dublin, Ireland*, 2012, 17-19
- Probability, random variables, and stochastic processes. **ATHANASIOS PAPOULIS** ; **S UNNIKRISH-NA PILLAI**. Tata McGraw-Hill Education. 2002